# EUROPEAN PATENT APPLICATION

(11) **EP 2 458 822 A1**
(43) Date of publication of application: **30.05.2012**
(21) Application number: 12156313.4
(22) Date of filing: 28.12.2004
(51) Int. Cl.: H04L 29/08, H04L 1/18, H04L 1/06

(54) **Repeat request control apparatus**

(62) Divisional of application: 04807980.0
(71) Applicant: Fujitsu Limited, Kawasaki-shi, Kanagawa 211-8588 (JP)
(72) Inventor: Shiizaki, Kotaro, Kanagawa, 211-8588 (JP); Jitsukawa, Daisuke, Kanagawa, 211-8588 (JP); Seki, Hiroyuki, Kanagawa, 211-8588 (JP)
(74) Representative: HOFFMANN EITLE

(57) **Abstract**

A transmitter configured to transmit data to a receiver using first and second antennas, comprising: a retransmission frame generation means for allocating both of first retransmission data corresponding to first data transmitted from the first antenna and second retransmission data corresponding to second data transmitted from the second antenna to slots in a retransmission frame for the first antenna, based on information regarding propagation paths for the first and second antennas obtained from the receiver; and a transmission means for transmitting the retransmission frame including the first and second retransmission data to the receiver by using the first antenna without using the second antenna.

## Description

### Technical Field

The present invention relates to a repeat request control for a radio telecommunication system using a transmission system transmitting and receiving by using a plurality of antennas or using a multi-carrier transmission transmitting a signal by using a plurality of frequency carrier.

### Background Art

An error compensation technique is vital for the current radio telecommunication keeping a high speed large capacity telecommunication in the scope. The vitally important error compensation techniques include an Automatic Repeat reQuest (ARQ) system that is a system returning an ACKnowledge (ACK) signal if a received packet has no error, or requesting for a retransmission of the packet by returning a Not--ACKnowledge (NACK) signal if the received packet is discovered to have an error.

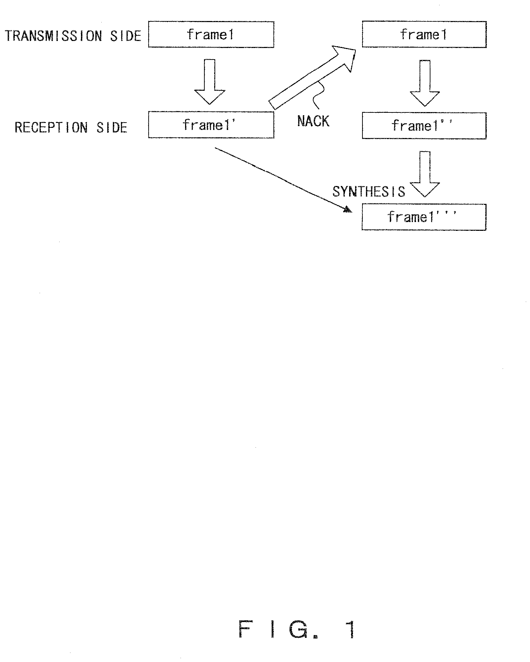

One kind of the ARQ is a Hybrid-ARQ (HARQ) . Fig. 1 shows the principle of the HARQ control system. The assumption here is that packet information is structured by the unit of frame made up of a plurality of data series. In the HARQ, an error is detected for each frame by using an error detection code such as a Cyclic Redundancy Check (CRC) that is added at the tail end of a frame. If an error is detected, a NACK signal is returned to a transmission side, requesting for a retransmission of the entire frame. In the HARQ, a reception result of the retransmitted frame is synthesized with that of the initially transmitted frame. This enables a utilization of soft judgment information of the initial transmission frame, thereby further improving a reception characteristic.

A conventional repeat request control system represented by the HARQ retransmits an error-detected frame as is, ending up retransmitting, in overlap, even a symbol without an occurrence of error, lowering transmission efficiency.

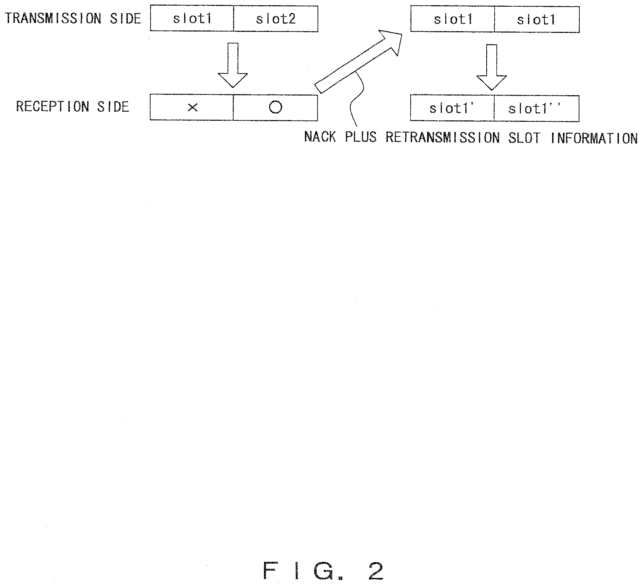

A reference patent document 1 is available as a technique for solving this problem, which is described by using Fig. 2. Frame data is divided into a plurality of slot units in a time domain and transmitted. A reception side detects an error for each slot by using an error detection code such as CRC so that a retransmission carried out for only a slot to which an error has occurred. In Fig. 2, a slot with no error is indicated by a "o" and a slot with an error occurrence is indicated by an "x" . Since the slot with no error is not retransmitted, there is a spare slot when retransmitting by the unit of frame. The characteristic of the method noted in the patent document 1 lies in copying a slot with an error to the spare slot for retransmission. This method provides efficiency because a retransmission is requested only for the slot with an error. Another benefit is an improved probability of correct decoding because a slot to be retransmitted is copied.

Gathering attentions as means for accomplishing a large capacity high speed telecommunication is a multi-carrier transmission represented by a MIMO (Multi Input Multi Output) transmission and an OFDM (Orthogonal Frequency Division Multiplexing). The MIMO is a system for telecommunicating by using a plurality of transmission/reception antennas. While each antenna receives a signal in the state of a plurality of signals being intermixed, each signal can be separated by carrying out highly sophisticated signal processing by taking advantage of independent propagation paths existing among the individual transmission/reception antennas. As a result, the number of pieces of data equivalent to the number of transmission antennas can be transmitted. The multi-carrier transmission is a system for increasing a transmitted data volume as a result of transmitting data by assigning data to a large number of carriers.

Let it be considered a case of applying a conventional repeat request control method to the MIMO or multi-carrier transmission. Since the MIMO system uses a plurality of antennas, a propagation path characteristic is different for each antenna. If a temporal variation of a fading is slow, a fading characteristic is little changed between a pre- and post-retransmission in a propagation path where the characteristic is degraded by a fading- Consequently, an error is caused by an influence of degradation due to the fading even if a retransmission is carried out, thus resulting in reduced transmission efficiency in many cases. Furthermore, the retransmission of extra frame or slot increases inter-user interferences, causing a degradation of a reception characteristic. Also in the multi-carrier telecommunication, an ill-influence of a fading in a specific carrier as in the case of the MIMO cannot possibly be compensated merely by means of a temporal diversity because of using a plurality of carriers.

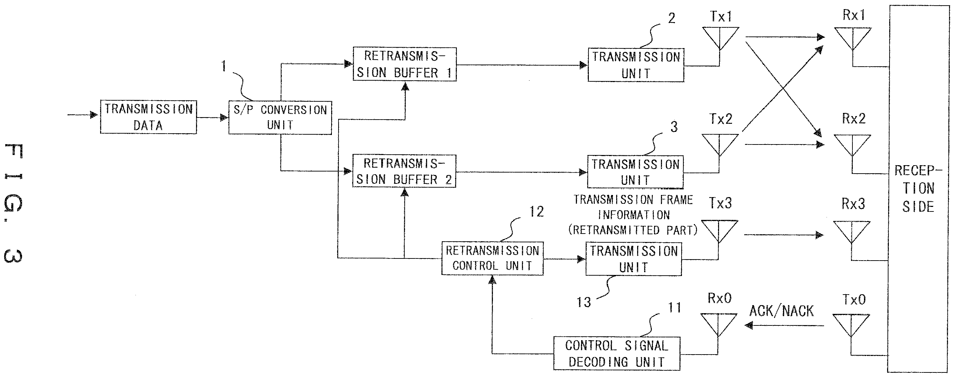

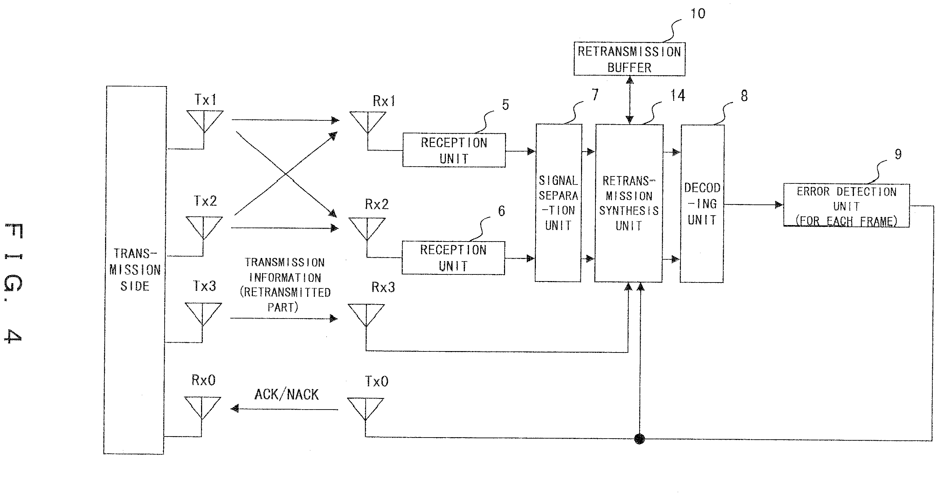

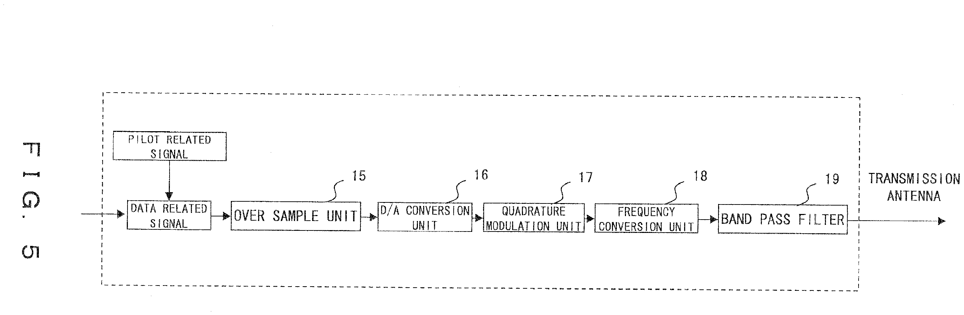

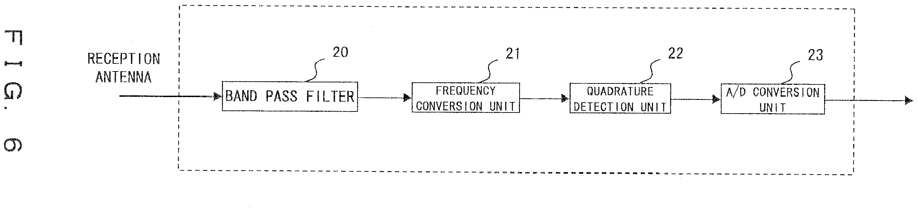

Figs. 3 and 4 show respective configurations of the transmission and reception sides in the case of applying the HARQ in the MIMO system comprising two transmission antennas and two reception antennas. The transmission unit and reception unit shown in the drawing are respectively configured as shown by Fig. 5 and 6. Transmission data is converted from serial data into parallel data at an S/P conversion unit 1 and sent to retransmission buffers 1 and 2. The transmission data output from the retransmission buffers 1 and 2 is modulated at transmission units 2 and 3, transmitted from antennas Tx1 and Tx2, and received at antennas Rx1 and Rx2 at the reception side. At the reception side, reception units 5 and 6 demodulate and a signal separation unit 7 applies a channel separation process to the transmitted data in the state of individual signals being intermixed, followed by a decoding process unit 8 applying a decoding process. In this event, an error detection unit 9 carries out an error detection process for each frame and sends an ACK signal from the antennas Tx0 to Rx0 if an error is not detected. At the transmission side, having received the ACK signal, transmits the next frame. If an error is detected, the error detection unit 9 returns a NACK signal to the transmission side by the unit of frame and simultaneously the reception side accumulates, in a retransmission buffer 10, a post-channel separation signal of the frame in which the error has occurred. The transmission side, having received the NACK signal, decodes the signal at a control signal decoding unit 11 and hands it to a retransmission control unit 12. Since the NACK signal includes information indicating which frame is in error, the retransmission control unit 12 identifies a frame in which the error has occurred in the deception side on the basis of the information, reads the frame from the retransmission buffers 1 and 2, and retransmits the entirety of the frame. It also sends information, as control information by way of the antennas Tx3 and Rx3, on the retransmission data which has been transmitted from the respective antennas. Over at the reception side, a retransmission synthesis unit 14 synthesizes the signal accumulated in the retransmission buffer 10 with the retransmitted reception signal by using a technique such as a chase combining or such. This process reduces an influence of signal error due to degradation by a fading by taking advantage of a temporal diversity effect.

The transmission units 2 and 3 at the transmission side makes an over sample unit 15 carry out an over-sampling whether a pilot related signal or data related signal, a D/A conversion unit 16 convert the transmission signal, that is, a digital signal into an analog signal, and a quadrature modulation unit 17 apply a quadrature modulation as shown in Fig. 5. It is further followed by a frequency conversion unit 18 applying a frequency conversion and a band pass filter 19 narrowing down a band and sending it to a transmission antenna. The reception units 5 and 6 on the reception side lead the reception signal received at a reception antenna into a band pass filter 20, applies a frequency conversion at a frequency conversion unit 21, performs a quadrature detection at a quadrature detection unit 22 and converts the analog signal into a digital signal at an A/D conversion unit 23 as shown in Fig. 6.

Note that the antennas Tx0, Tx3, Rx0 and Rx3 are drawn as different from the antennas Tx1, Tx2, Rx1 and Rx2 in Figs. 3 and 4; these antennas, however, are usually the same antenna and yet shown as different ones for convenience of the noting herein. This is the same for the following descriptions.

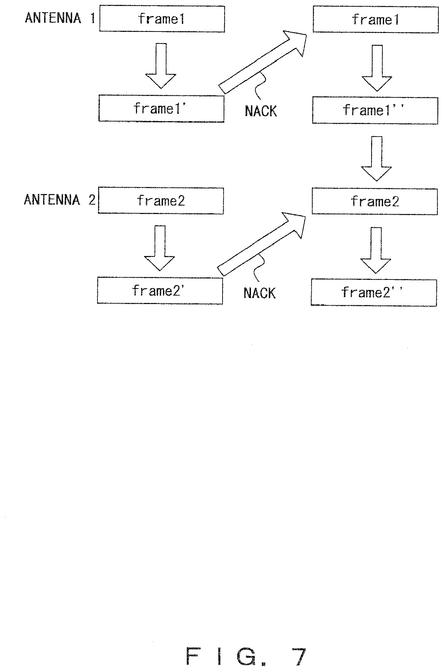

Fig. 7 shows specifically how a frame retransmission is carried out. The transmission side, having received a NACK signal, retransmits the same frame as one, in which an error has occurred, for each antenna.

In the HARQ, the entirety of a frame in which an error has been detected is retransmitted from the same antenna as one used for the initial transmission. Therefore, if a variation of a fading is slow, consequently causing an ill-influence of degradation due to a fading to exist in a propagation path from a certain transmission antenna to reception antenna, then a propagation path characteristic will not be improved with a passage of time, ending up repeating retransmission for a number of times as long as the same transmission antenna is used. As a result, transmission efficiency decreases.

Against such a problem, there is a method of using a different antenna from one used at the initial transmission (refer to a patent document 2). Its principle is shown in Fig. 8. It retransmits data by changing over between the antenna 1 and 2, using an antenna different from the initial transmission. This can obtain not only a temporal diversity but also a spatial diversity effect, extracting a retransmission effect. This method, however, sends the entirety of the frame at the retransmission, transmitting an extra slot, and therefore a through-put is decreased.

Consequently required is a repeat request control method that eliminates a waste of retransmitting the entirety of frame in a multi-carrier transmission and also reinforcing an anti-fading property by extracting a various diversity effects.
Patent document 1: Laid-Open Japanese Patent Application Publication No. H06-204988
Patent document 2: Laid-Open Japanese Patent Application Publication No. 2004-135304

### Disclosure of Invention

The object of the present invention is to provide a repeat request control apparatus eliminating a necessity of retransmitting the entirety of a frame including a slot in which an error has occurred and being capable of extracting a various diversity effects.

A repeat request control apparatus according to the present invention is one used for a transmission system using a plurality of antenna or plurality of sub-carriers, comprising: a retransmission frame generation unit for structuring a retransmission-use frame by embedding only a slot to be retransmitted not only in a slot part to be retransmitted within a frame for retransmission but also in a slot unnecessary for retransmission based on information obtained from a reception side and related to a slot within transmission data in which an error has occurred or has highly possibly occurred; and a transmission unit for transmitting the retransmission-use frame to the reception side.

The present invention is contrived not to retransfer a slot, when retransferring it, in which no error has occurred, performing no waste transmission and extracting a various diversity effects and therefore a signal transmission having resistance against a fading can be carried out.

### Brief Description of Drawings

Fig. 1 is a diagram showing the principle of HARQ control system;
Fig. 2 is a diagram describing a conventional technique;
Fig. 3 is a diagram showing a configuration of a transmission side in the case of applying the HARQ in the MIMO system comprising two transmission antennas and two reception antennas;
Fig. 4 is a diagram showing a configuration of a reception side in the case of applying the HARQ in the MIMO system comprising two transmission antennas and two reception antennas;
Fig. 5 is a diagram showing a configuration of the transmission unit of Figs. 3 and 4;
Fig. 6 is a diagram showing a configuration of the reception unit of Figs. 3 and 4;
Fig. 7 is a diagram showing how a frame retransmission is carried out in a conventional technique;

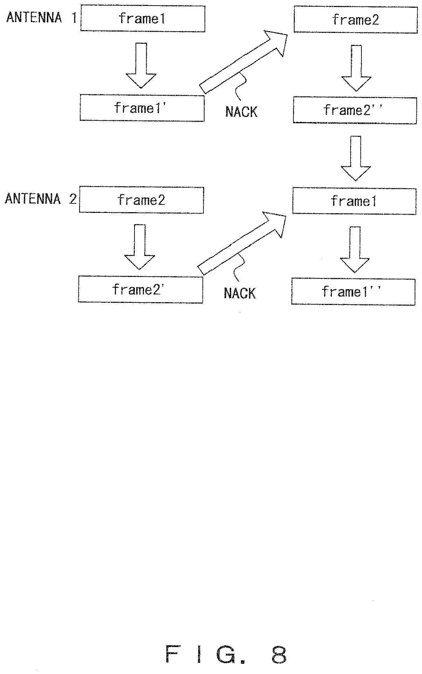

Fig. 8 is a diagram of the principle of a conventional method using an antenna, for retransmission, which is different from the one used for the initial transmission;
Fig. 9 is a diagram of the principle of a preferred embodiment of the present invention;
Fig. 10 is a diagram exemplifying a configuration of a transmission side according to a first embodiment;
Fig. 11 is a diagram exemplifying a configuration of a reception side according to a first embodiment;
Fig. 12 is a process flow at a slot assignment retransmission control unit according to the first embodiment of the present invention (part 1);
Fig. 13 is a process flow at a slot assignment retransmission control unit according to the first embodiment of the present invention (part 2);
Fig. 14 is a process flow at a slot assignment retransmission control unit according to the first embodiment of the present invention (part 3);
Fig. 15 is a process flow at a slot assignment retransmission control unit according to the first embodiment of the present invention (part 4);
Fig. 16 is a diagram describing a second embodiment of the present invention;
Fig. 17 is a process flow at a retransmission control unit according to the second embodiment;
Fig. 18 is a diagram describing a third embodiment of the present invention;
Fig. 19 is a process flow at a retransmission control unit of the third embodiment;
Fig. 20 is a process flow at the retransmission control unit when carrying out a retransmission power control;
Fig. 21 is a block diagram of a configuration of the slot assignment retransmission control unit;
Fig. 22 is a diagram describing a concept in the case of applying the first through third embodiments to a multi-carrier transmission (part 1);
Fig. 23 is a diagram describing a concept in the case of applying the first through third embodiments to a multi-carrier transmission (part 2);
Fig. 24 is a diagram describing a concept in the case of applying the first through third embodiments to a multi-carrier transmission (part 3);
Fig. 25 is a diagram describing a concept in the case of applying the first through third embodiments to a multi-carrier transmission (part 4);
Fig. 26 is a diagram describing a concept in the case of applying the first through third embodiments to a multi-carrier transmission (part 5);
Fig. 27 is a diagram exemplifying a format of control information including SIR information used for an individual preferred embodiment (part 1);
Fig. 28 is a diagram exemplifying a format of control information including SIR information used for an individual preferred embodiment (part 2);
Fig. 29 is a diagram exemplifying a format of control information including SIR information used for an individual preferred embodiment (part 3);
Fig. 30 is a diagram exemplifying a format of control information including SIR information used for an individual preferred embodiment (part 4); and
Fig. 31 is a diagram exemplifying a format of control information including SIR information used for an individual preferred embodiment (part 5).

### Best Mode for Carrying Out the Invention

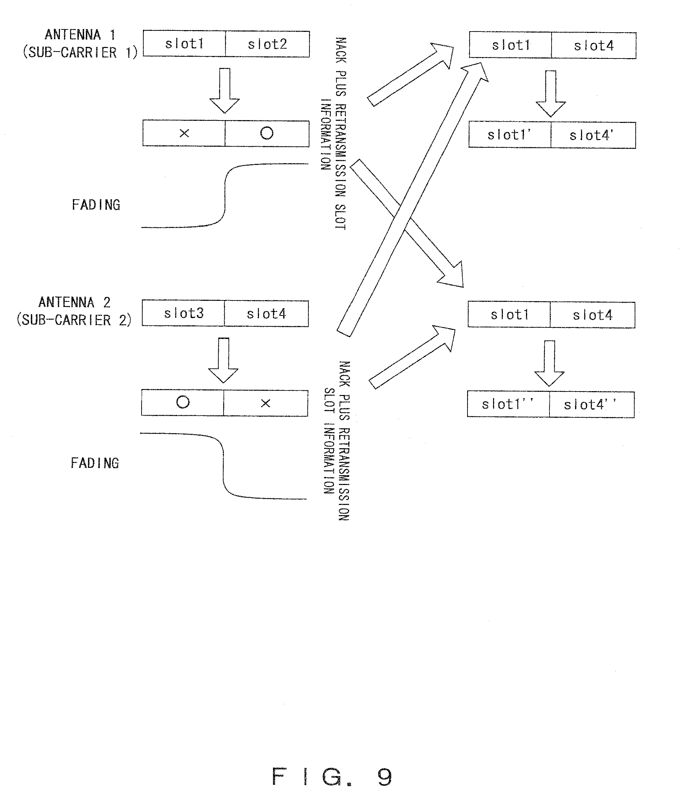

The first is a description of the principle of a preferred embodiment of the present invention by referring to Fig. 9.

The preferred embodiment of the present invention is configured to let a reception side detect a slot in which an error has occurred or likely to occur; specifically, by adding a CRC, and collecting, and comparing, propagation path information for each slot. It is followed by requesting for retransmitting only a slot in which an error has occurred or likely to occur. In the showing of Fig. 9, a slot in which an error has occurred or likely to occur is marked with an "x". The curves drawn as "fading" indicates a large effect due to a fading by the lower part of the curve, indicating a condition of an error inclined to occur, in which a fading condition is good and an error is unlikely to occur by the higher part of the curve in the drawing. The reception side adds retransmission information and requests for a retransmission when returning a NACK to the transmission side. Using the retransmission slot information sent from the reception side, the transmission side makes retransmission slot assignment information, for each antenna and/or frequency, in consideration of retransmitting a retransmission slot by using an antenna and/or frequency that are different from those of the initial transmission. The transmission side sends out a retransmission signal based on the information. The reception side synthesizes the original information and retransmitted information, thereby making it possible to improve an S/N ratio of the reception.

The preferred embodiment of the present invention is configured to use a signal to interference noise power ratio (SIR) as propagation path information. Since an SIR of a reception signal is varied by an influence of a fading, a propagation path characteristic can be grasped by examining the movement. A pilot related signal usually is used as a method for measuring an SIR. Adding a pilot related signal as a header of a data related signal and calculating a deviation of a pilot signal power make it possible to calculate an SIR. The preferred embodiment of the present invention is configured to calculate an SIR for each slot by inserting a pilot related signal at the head of each slot. Note that the preferred embodiment of the present invention describes the case of using an SIR; it is, however, possible to likewise consider a case of using a CRC.

The preferred embodiment of the present invention is configured to request a retransmission of a slot in which an error has occurred or likely to occur, and therefore provide efficiency. Also, a retransmission is carried out in the units of slot in not only time domain but also frequency domain or antenna domain, thereby enabling an easy acquisition of a diversity effect and extraction of sufficient results of a retransmission. The number of used transmission antennas can be temporarily reduced depending on a method for allocating slots at the time of retransmission, and therefore a transmission power can be reduced and also the number of multiplexing transmission signal at a reception antenna is reduced, thereby enabling an improvement of an error rate characteristic. Also, regarding the antenna for a MIMO transmission as a carrier in the case of applying to a multi-carrier transmission, the number of carriers to be used is temporarily reduced, thereby decreasing a transmission power.

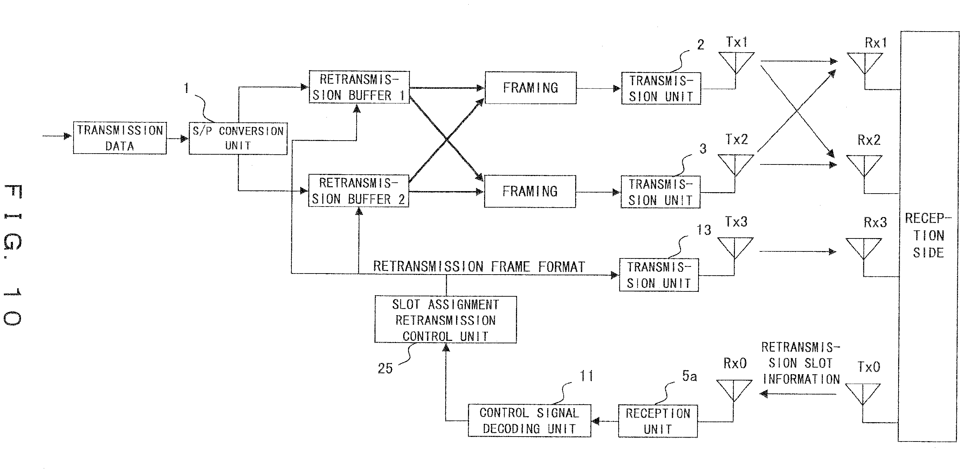

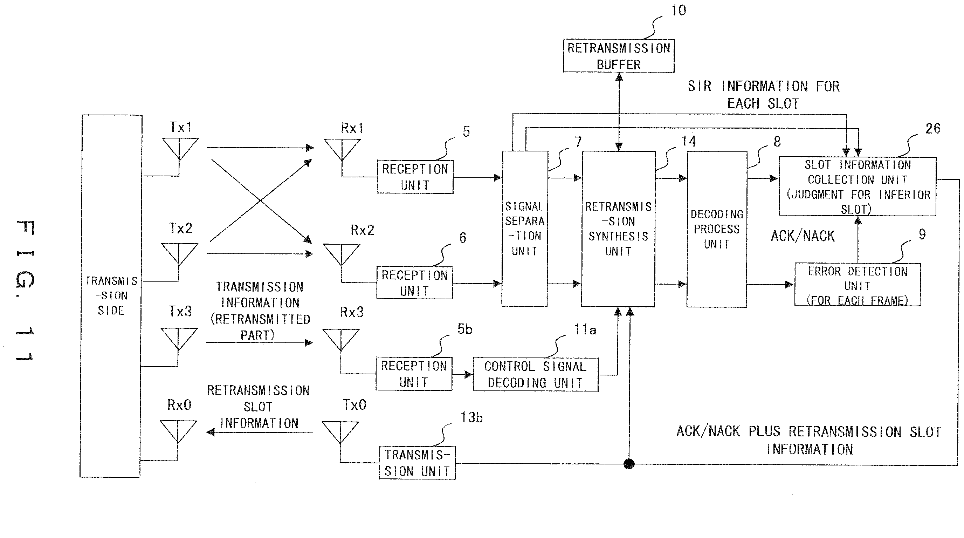

Figs. 10 and 11 are diagrams exemplifying a configuration of a transmission side and that of a reception side, respectively, according to a first embodiment. In the showing of Figs. 10 and 11, the same component sign is assigned to the same constituent component as one shown in Figs. 3 and 4.

This example is also the case of applying the present invention to a MIMO system comprising two transmission antennas and two reception antennas as in the case of the conventional configuration. The transmission unit and reception unit are conceivably configured as shown in Figs. 5 and 6, respectively. Transmission data transmitted by way of a MIMO channel is received by antennas Rx1 and Rx2. After applying a channel separation process, a demodulation process is carried out. In this event, a slot information collection unit 26 measures an SIR for each slot, and, for example, compares the measurement value with a predefined threshold value to determine a slot that is adversely influenced by an inferior propagation path (such a slot is named as "interior slot" herein) . In the case of using a CRC, a decoding process unit 8 determines a slot in which an error has been detected by the CRC to be an inferior slot, in place of using SIR information. Spare slot information is also made on the basis of the inferior slot information, followed by determining retransmission slot information. A power for retransmission is also determined in this stage. If a condition of a propagation path is particularly inferior, a transmission power for a retransmission slot can be increased, or if many spare slots exist, a retransmission can be carried out at a low power by placing a plurality of the same retransmission slots. Simultaneously with sending the retransmission slot information along with an ACK/NACK signal back to the transmission side by using a transmission unit 13b and antennas Tx0 and Rx0, the reception side accumulates, in a retransmission buffer 10, a post-channel separation reception signal of a frame in which an error has occurred. Over on the transmission side, reception unit 5a receives the retransmission slot information, a control signal decoding unit 11 decodes it, a slot assignment retransmission control unit 25 determines in what pattern a retransmission slot is to be placed in a spare slot of each frame including between different antennas based on the retransmission slot information sent over from the reception side, followed by sending out the retransmission slot from each antenna. Also sent to the reception unit by way of the antennas Tx3 and Rx3 is information, as control information, of the retransmission data transmitted from each antenna. Over on the reception side, the retransmitted data at the time of retransmission is synthesized with data accumulated in the retransmission buffer 10 by using information of retransmission data received at a reception unit 5b and decoded at a control signal decoding unit 11a. This provides efficiency because only a slot in which an error has occurred is synthesized. Moreover, even in a propagation environment with a slow variation where a temporal diversity effect is difficult to obtain, a retransmission by changing antennas or carriers makes it possible to acquire a diversity gain, thereby enabling a prevention of a degradation of the propagation path characteristic.

While there are various methods for establishing a basis of determining a retransmission slot pattern, conceivable is a method for assigning, to a spare slot, a retransmission slot of which the propagation path is inferior in high priority from among the retransmission slots, or a method for assigning in the course of reducing a resource used for transmission, such as a sub-carrier.

Fig. 9 exemplifies a case of two slots constituting one frame. Here, the retransmission is carried out by inserting a slot 4 initially transmitted from the antenna 2 into a spare slot of the antenna 1 and inserting a slot 4 into a spare slot of the antenna 2. An allocation of data not only in the time domain but also straddling between the different antennas makes it possible to realize a diversity effect. Note that the present embodiment is applicable to a multi-carrier transmission in a similar manner by replacing the plurality of transmission antennas for the MIMO with a plurality of frequencies, respectively.

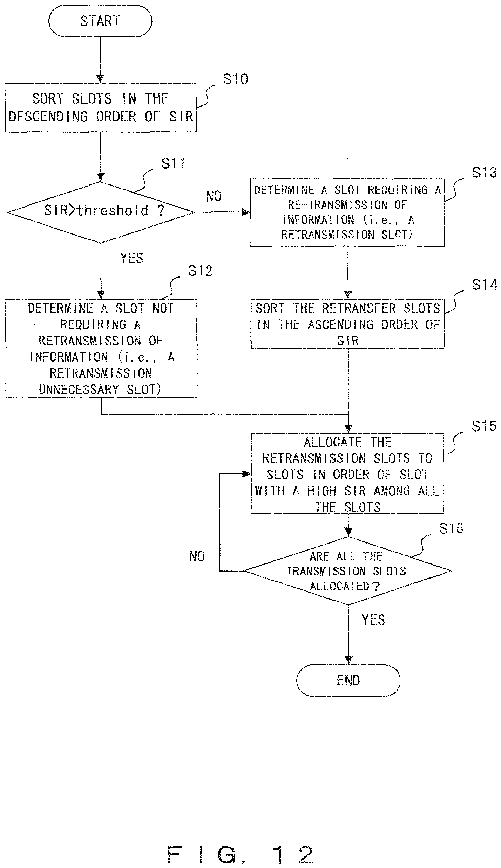

Figs. 12 through 15 show a process flow at a slot assignment retransmission control unit according to the first embodiment of the present invention.

Fig. 12 is a fundamental flow of the first embodiment.

First, in the step S10 the slot assignment retransmission control unit 25 sorts slots in a descending order of SIR, followed by judging whether or not the SIR of the sorted slot is larger than the threshold value in the step S11. If the judgment in the step S11 is "yes", it determines a slot not requiring a retransmission of information (i.e., a slot not requiring a transmission) in the step S12 and shifts the process to the step S12. If the judgment in the step S11 is "no", it determines a slot requiring a transmission of information (i.e., a retransmission slot) in the step S13 and sorts the retransfer slots in the ascending order of SIR in the step S14, followed by shifting the process to the step S15. The control unit 25 assigns the retransmission slots to slots in order starting from a slot with the highest SIR among all the slots within a frame in the step S15. It judges whether or not the retransmission slots are assigned to the frame to be retransmitted in the step S16. If the judgment of the step S16 is "no", it returns the process to step S15. If the judgment of the step S16 is "yes", it ends the process.

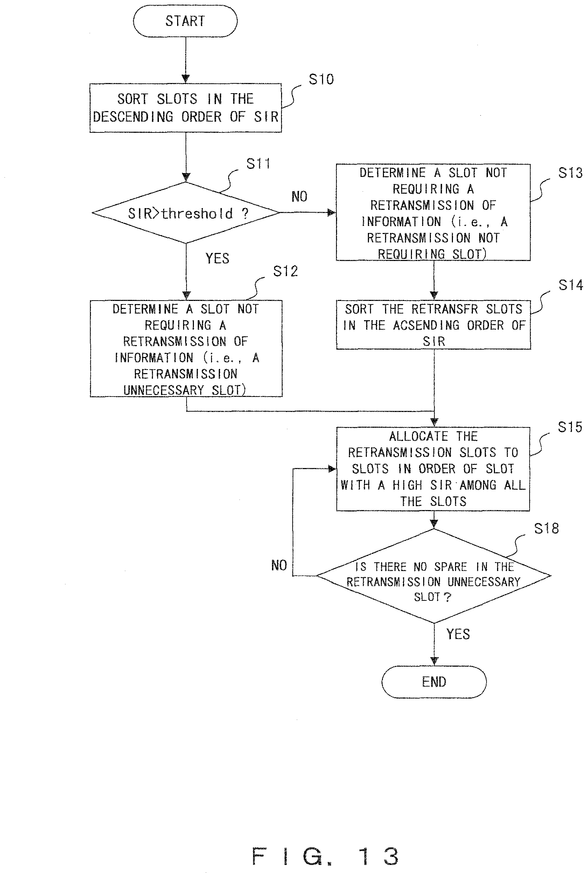

Fig. 13, being a modified embodiment of Fig. 12, is a flow of process of filling all retransmission frames with retransmission slots. In the showing of Fig. 13, the same step number is assigned to the same step as in Fig. 12 and the description is omitted here.

A different part in Fig, 13 from Fig. 12 is the step S18. After retransmission slots are embedded in the frame in order in the step S15, the retransmission slots are also embedded in the retransmission not requiring slot(s) of the frame, repeating the embedding process until the entirety of the frame is filled with the retransmission slots according to the judgment of S18. When the frame is fully filled, the process at the retransmission control unit is ended.

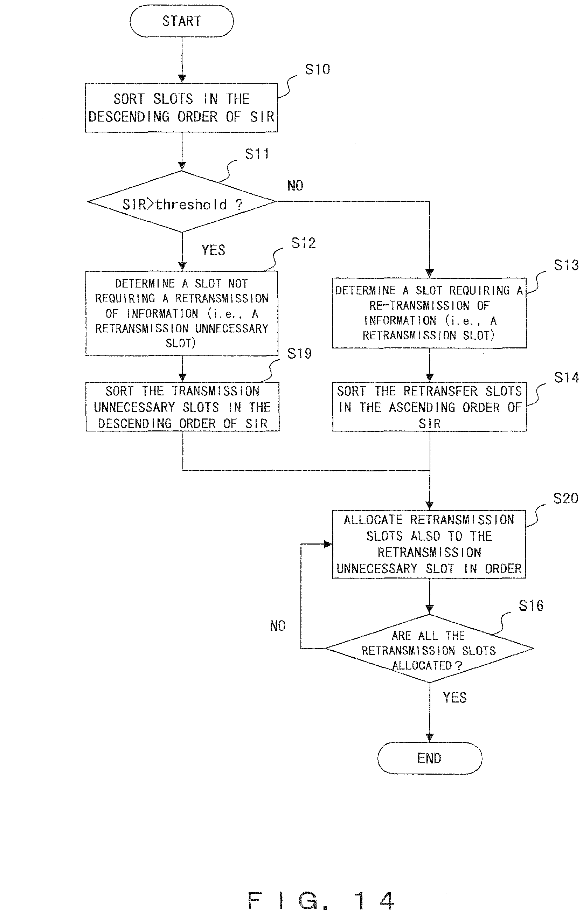

Fig. 14, being a modified embodiment of Fig. 12, is a flow of process of copying a retransmission slot and allocating it also to a retransmission unnecessary slot. Except that the entirety of the frame need not be embedded with retransmission slots in this case. In the showing of Fig. 14, the same step number is assigned to the same step as in Figs. 12 and 13 and a description is omitted here. In the flow of Fig. 14, the retransmission control unit 25 sorts retransmission unnecessary slots in the descending order of SIR as shown in the step S19. Then it copies a retransmission slot to be embedded in a retransmission frame and embeds it in a retransmission unnecessary slot in the step S20. A conceivable configuration is in manner to copy one retransmission slot and embed two of them in each retransmission frame.

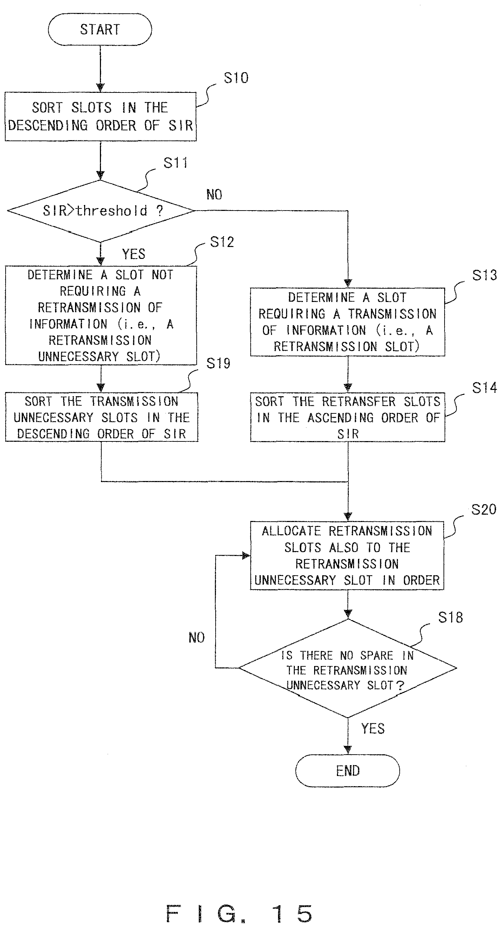

Fig. 15, being a modified embodiment of Fig. 12, is a flow of process of copying a retransmission slot and allocating it also to a retransmission unnecessary slot and transmitting by embedding the retransmission slots in the entirety of retransmission frame. In the showing of Fig. 15, the same step number is assigned to the same step as in Figs. 12 through 14 and the description is omitted here. The process shown by Fig. 15 is a combination of those of Figs. 13 and 14, the retransmission control unit 25 sorts retransmission unnecessary slots in the descending order of SIR as shown in the step S19 and allocates the retransmission slots to the retransmission unnecessary slot in order in the step S20. Then it confirms whether there is a spare in the retransmission unnecessary slots of the retransmission frame in the step S18 and the retransmission control unit ends the process if all the slots are filled with the embedded slots.

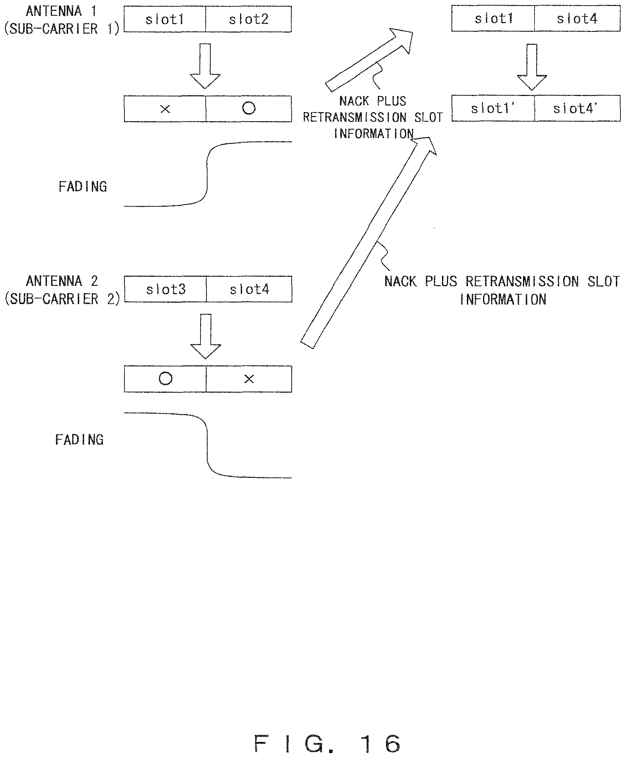

Fig. 16 shows a second preferred embodiment. In this embodiment, a retransmission pattern is different from the first embodiment. That is, a slot 4 initially transmitted by way of the antenna 2 is assigned to the spare slot of the antenna 1 while the antenna 2 is not used for a retransmission. This configuration makes it possible to reduce the number of transmission antenna temporarily, obtaining a benefit of increasing a reception diversity effect. This also enables a reduction of the transmission power. Note that the present embodiment is applicable to a multi-carrier transmission in a similar manner by replacing the plurality of transmission antennas for the MIMO with a plurality of frequencies, respectively.

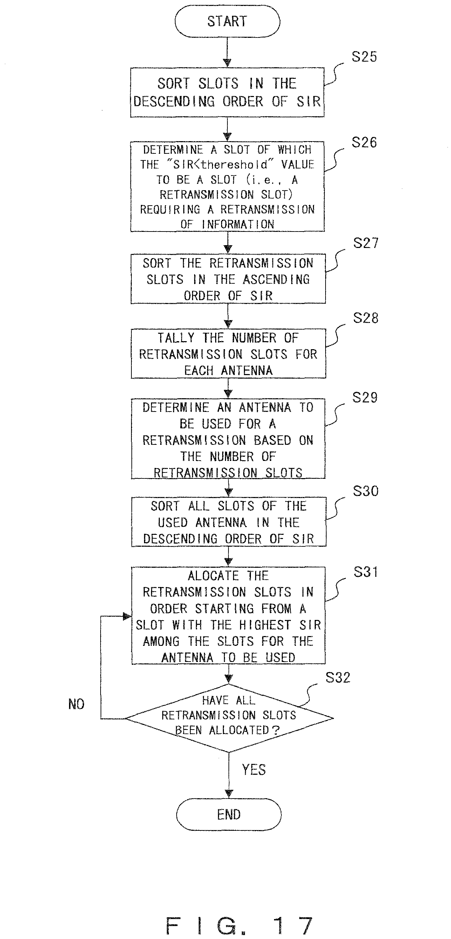

Fig. 17 is a process flow at a retransmission control unit according to the second embodiment.

First, the retransmission control unit sorts slots in the descending order of SIR in the step S25. It determines a slot of which a threshold value is smaller than the SIR to be a slot (i.e., a retransmission slot) requiring a retransmission of information in the step S26. It then sorts the retransmission slots in the ascending order of SIR in the step S27, and tallies the number of retransmission slots for each antenna in the step S28. It then determines an antenna to be used for a retransmission based on the number of retransmission slots in the step S29 and sorts all slots of the used antenna in the descending order of SIR in the step S30. It then allocates the retransmission slots in order starting from a slot with the highest SIR among the slots for the antenna to be used in the step S31. It then judges whether or not all retransmission slots are allocated, in the step S32. If the judgment of S32 is "no", it returns the process to the step S31. If the judgment of the step S32 is "yes", the process at the retransmission control unit ends.

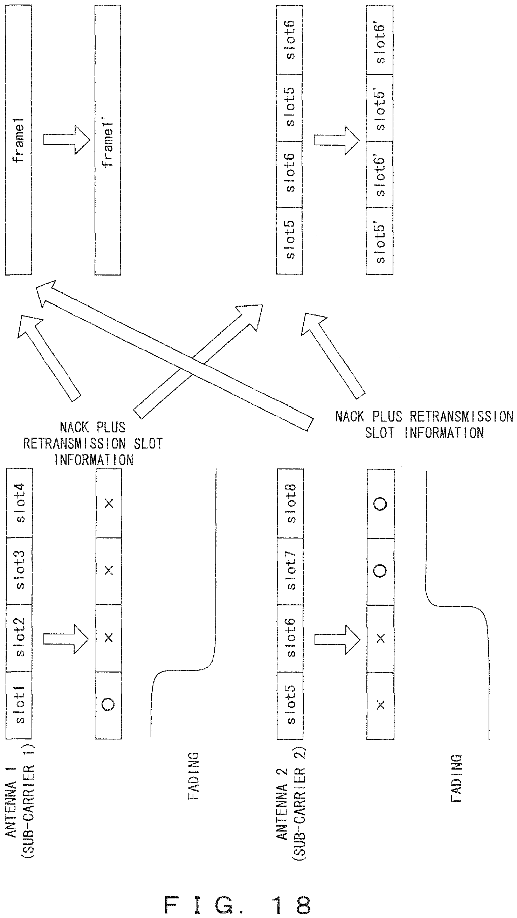

Fig. 18 shows a third embodiment. The configuration here is a MIMO system having two transmission antennas and two reception antennas, while one frame is made up of four slots. In this example, the propagation path characteristic of antenna is assumed to be inferior so as to require retransmissions for slots 2, 3 and 4. In this example, the possibility is that a propagation path characteristic of the spare slot of the antenna 1 is a little inferior as well that an error may have occurred therein. The entirety of frame is accordingly retransmitted for the antenna 1 instead of using the spare slot thereof. As for the antenna 2, a partial retransmission is carried out by using only the spare slot of the antenna 2 in lieu of assigning the spare slot of the antenna 1. This configuration makes it possible to not only guarantee a quality of the slot 1 of the antennas 1 but also carry out a partial retransmission by using only a slot(s) with a better propagation path characteristic for the antenna 2. A criterion for retransmitting the entirety of a frame may conceivably adopt a case of the number of slots requiring retransmissions is equal to or more than a half of the number of slots included in a frame.

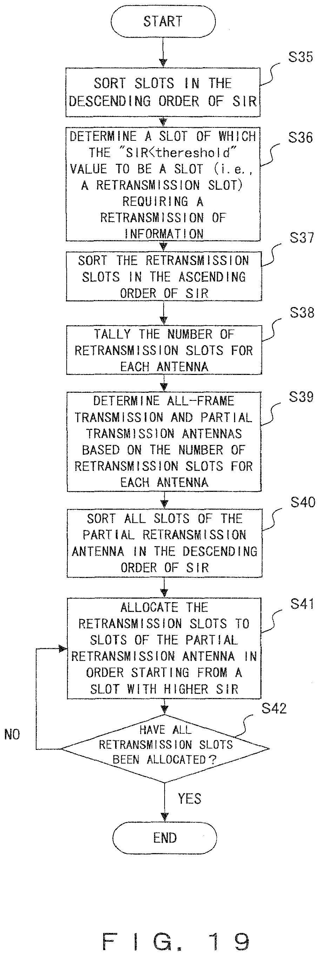

Fig. 19 is a process flow at a retransmission control unit according to the third embodiment.

First, the retransmission control unit sorts slots in the descending order of SIR in the step S35 and determines a slot of which the SIR is smaller than a threshold value to be a slot requiring a retransmission of information (i.e., a retransmission slot) in the step S36. It sorts the retransmission slots in the ascending order of SIR in the step S37 and tallies the number of retransmission slots for each antenna in the step 538. It determines an antenna for the entire frame retransmission and partial retransmission based on the number of retransmission slots for each antenna in the step S39. It then sorts all slots of the partial retransmission antenna in the descending order of SIR in the step S40 and allocates the retransmission slots to slots of the partial retransmission antenna in order starting from a slot with the highest SIR in the step S41. It then judges whether or not all the retransmission slots have been allocated in the step S42. If the judgment of the step S42 is "no", it returns the process to the step S41, while if the judgment of the step S42 is "yes", the process at the retransmission control unit ends.

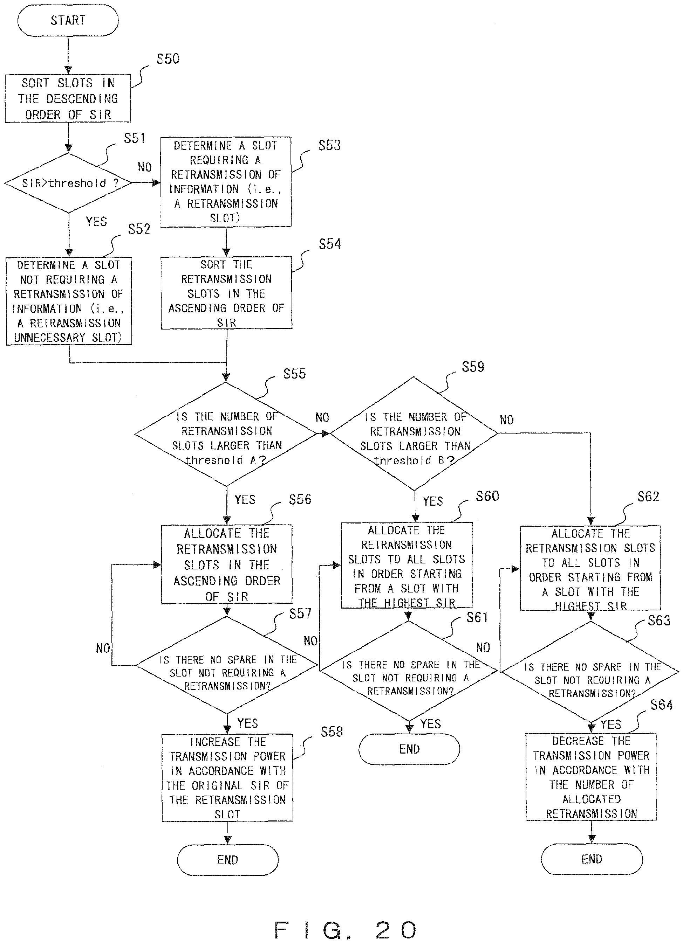

Fig. 20 is a process flow at the retransmission control unit when carrying out a retransmission power control.

First, the retransmission control unit sorts slots in the descending order of SIR in the step S50. It judges whether or not the SIR is larger than a threshold value in the step S51. If the judgment for the step S51 is "yes", it determines a slot not requiring a retransmission of information (i.e., a slot not requiring a transmission) in the step S52 and proceeds to the step 555. If the judgment for the step S51 is "no", it determines a slot requiring a retransmission of information (i.e., a retransmission slot) in the step S53, sorts the retransmission slots in the ascending order of SIR in the step S54 and proceeds to the step S55.

In the step S55, the retransmission control unit judges whether or not the number of retransmission slots is larger than a first threshold value (i.e. , a threshold A). If the judgment of the step S55 is "yes", it allocates the retransmission slots to all slots in order starting from a slot with the highest SIR in the step S56 and judges whether there is a spare in the slot not requiring a transmission. If the judgment of the step S57 is "yes", it returns the process to the step S56. If the judgment of the step S57 is "no", it increases the transmission power in accordance with the original SIR of the retransmission slot in the step S58 and ends the process.

If the judgment of the step S55 is "no", it judges whether or not the number of retransmission slots is larger than a second threshold value (i.e., a threshold B) in the step S59. If the judgment of the step S59 is "yes", it allocates the retransmission slots to all slots in order starting from a slot with the highest SIR in the step S60, and judges whether or not there is no spare in the slot not requiring a retransmission in the step S61. If the judgment of the step S61 is "no", it returns the process to the step S60, while if the judgment of the step is "yes", it ends the process.

If the judgment of the step S59 is "no", it allocates the retransmission slots to all slots in order starting from a slot with the highest SIR in the step S62, and judges whether or not there is no spare in the slot not requiring a retransmission in the step S63. If the judgment of the step S63 is "no", it returns the process to the step S62, while if the judgment of the step S63 is "yes", it decreases the transmission power in accordance with the number of allocated retransmission slots in the step S64 and ends the process.

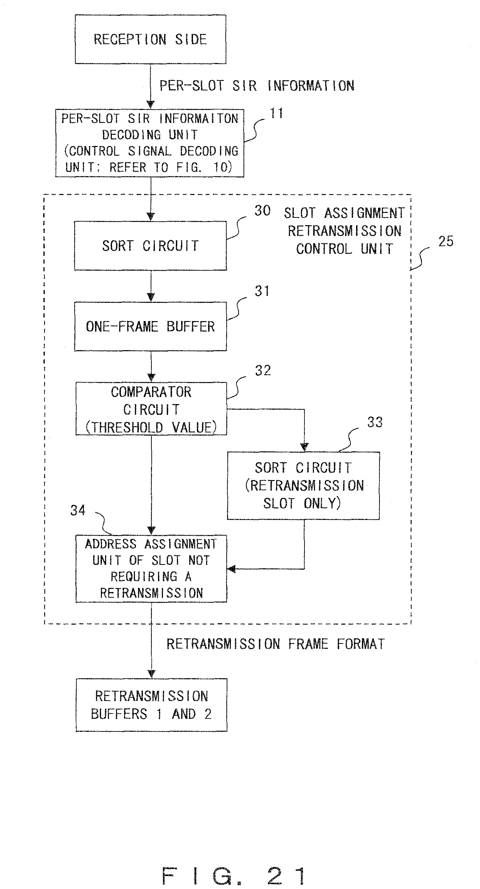

Fig. 21 is a block diagram of a configuration of the slot assignment retransmission control unit.

A per-slot SIR information decoding unit receives SIR information of each slot as a part of control information from the reception side. The per-slot SIR information decoding unit corresponds to the control signal decoding unit 11 shown in Fig. 10. The SIR information of each slot is given to a sort circuit 30 of the slot assignment retransmission control unit 25 so as to sort the SIR for each slot. A one-frame buffer 31 stores an SIR value of each slot for one frame. A comparator circuit 32 reads an SIR value of each slot- from the one-frame buffer 31 and compares it with a threshold value. As a result of the comparison, each slot is categorized into a retransmission slot and a slot not requiring a retransmission. The retransmission slot is further sorted by a sort circuit 33. Then, an address assignment unit 34 assigns an address of a slot not requiring a retransmission to the retransmission slot, generates a retransmission frame format and stores it in retransmission buffer 1 and 2.

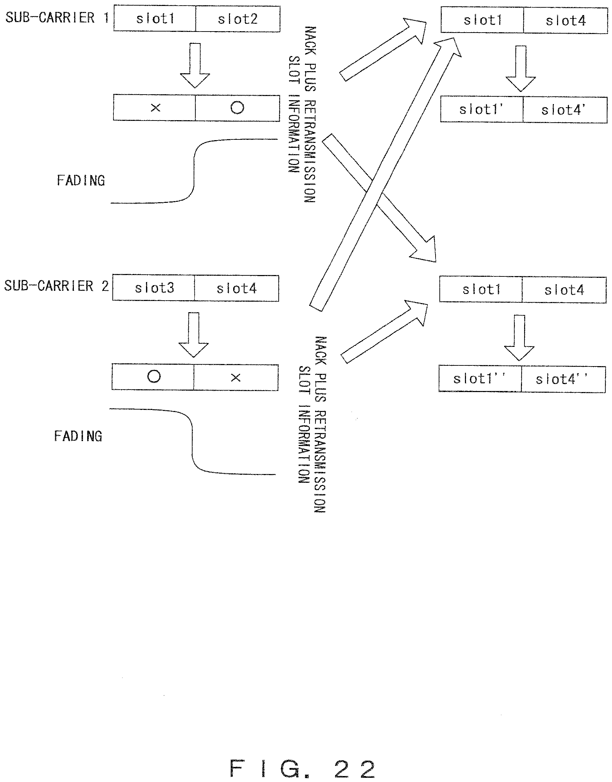

Figs. 22 through 26 are diagrams describing respective concepts in the case of applying the first through third embodiments to a multi-carrier transmission.

Fig. 22 is a diagram corresponding to Fig. 9 of the first embodiment. While Fig. 9 assigns the antennas 1 and 2 respectively to the slots 1 through 4, in Fig. 22 the antennas 1 and 2 are corresponded to the sub-carriers 1 and 2. Therefore, the slots 1 and 2 are transmitted by using the sub-carrrier 1, and the slots 3 and 4 are transmitted by using the sub-carrrier 2. Then, if an error occurs as indicated by "x", the slots 1 and 4 are sent out by using the sub-carriers 1 and 2 at the time of retransmission.

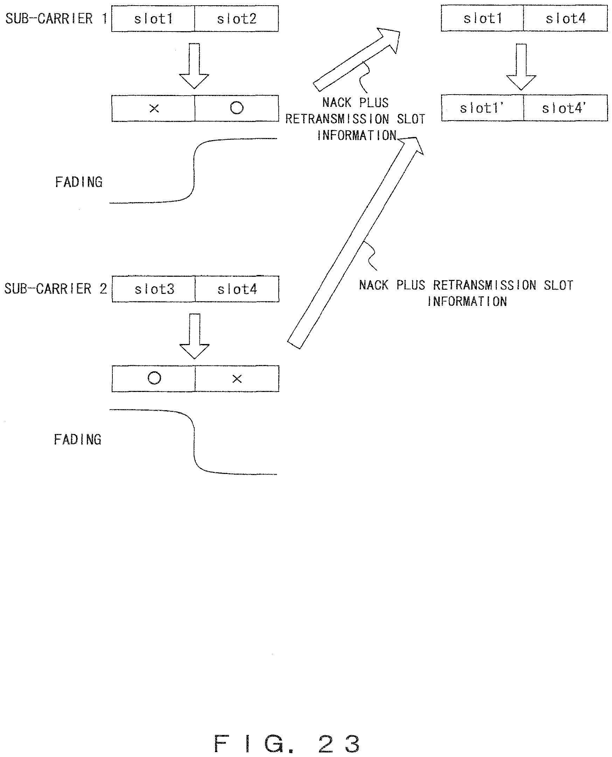

Fig. 23 is a diagram corresponding to Fig. 16 of the second embodiment. Likewise, Fig. 16 transmits the slots 1 through 4 by using the antennas 1 and 2, whereas the configuration shown in Fig. 23 transmits them by using the sub-carriers 1 and 2. Only the sub-carrier 1 is used at the time of retransmission. This accordingly saves power since there is no need to transmit the sub-carrier 2.

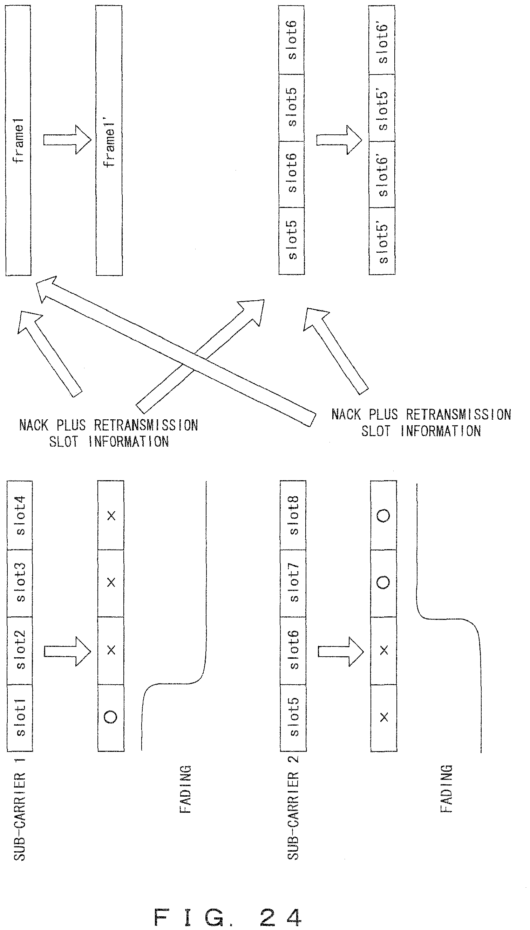

Fig. 24 is a diagram corresponding to Fig. 18 of the third embodiment. Likewise, Fig. 18 uses the antennas 1 and 2, whereas the configuration shown in Fig. 24 transmits them by using the sub-carriers 1 and 2. At the time of retransmission, the frame 1 of the sub-carrier 1 is retransmitted as is, while the sub-carrier 2 is used for retransmission of the slots 5 and 6.

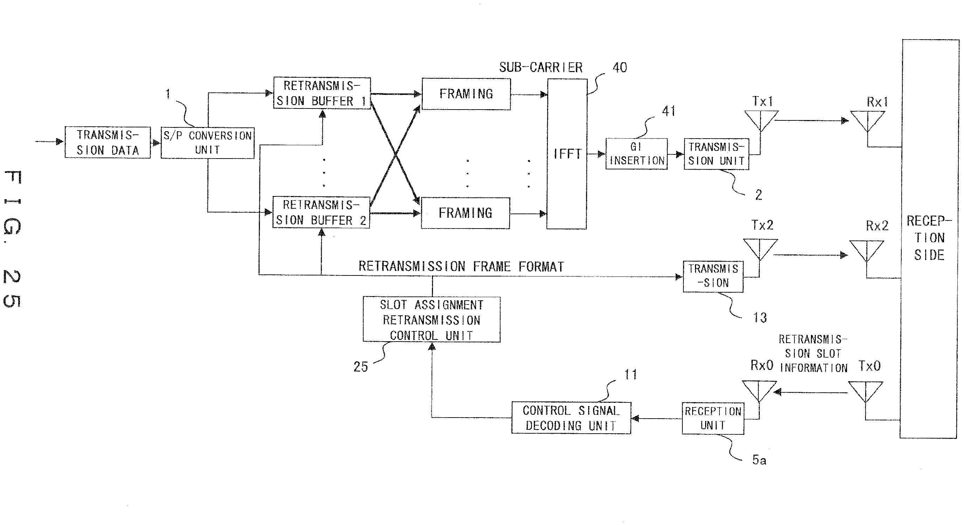

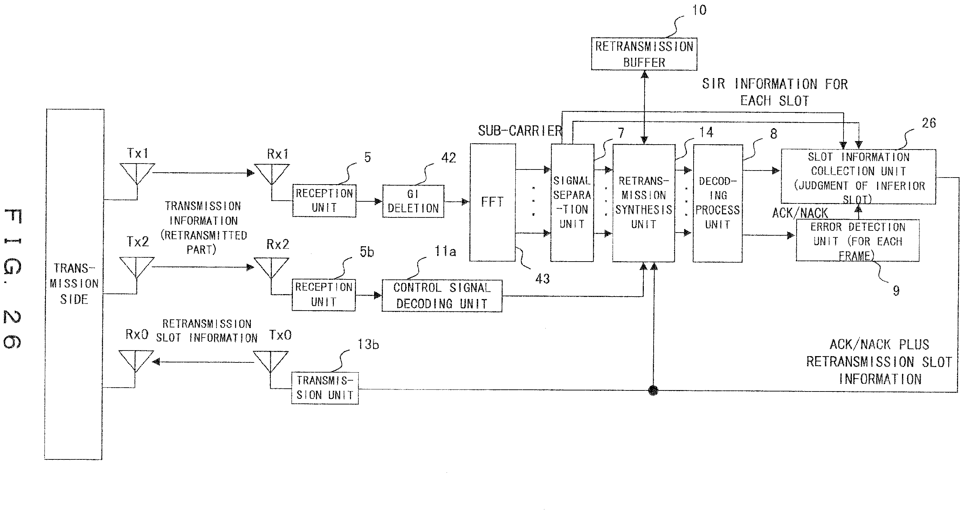

Fig. 25 is a diagram showing a configuration of a transmission side in the case of performing a multi-carrier transmission; and Fig. 26 is a diagram showing a configuration of a reception side in the case of performing a multi-carrier transmission. In the showing of Figs. 25 and 26, the same component sign is assigned to the same comprisal as shown in Figs. 10 and 11, and the description is omitted here. Although it is a multi-carrier transmission, the configuration according to Figs. 25 and 26 comprises only one antenna, only one of the transmission unit 2 and one of reception unit 5 are equipped. Instead, the transmission side is equipped with an inverse Fourier transformer (IFFT) 40 and a guard interval insertion unit 41, and the reception side is equipped with a Fourier transformer (FFT) 43 and a guard interval deletion unit 42. Other comprisals are the same as those of Figs. 10 and 11, and the description is accordingly omitted here. This system apples an inverse Fourier transform, thereby superimposing a signal on each sub-carrier, and applies a Fourier transform, thereby extracting a signal from each sub-carrier. Note that a plurality of antennas may be used in lieu of using one as shown herein. In such a case, a multi-carrier transmission is carried out by using a plurality of antennas, and therefore respective configurations of combinations of those of Fig. 25 and 26 with those of Fig. 10 and 11 are used.

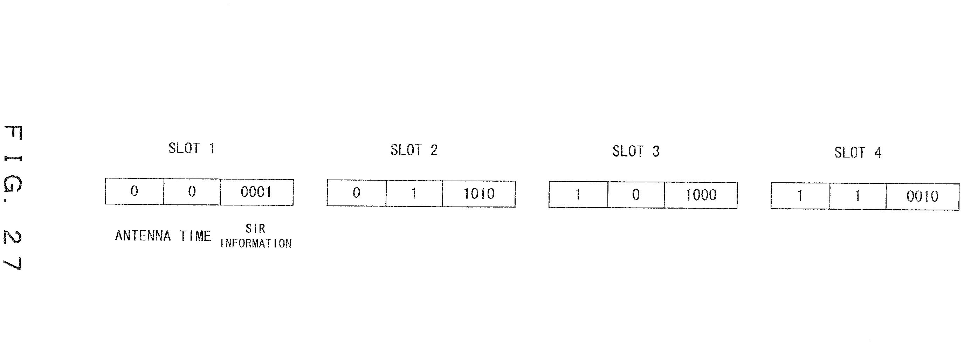

Figs. 27 through 31 show diagrams exemplifying respective formats of control information including SIR information used for individual preferred embodiments.

Fig. 27 is control information including SIR information of each slot transmitted from the reception side to transmission side according to the first and second embodiments. The first bit is information data indicating as to from which antenna the slot has been transmitted, indicating the antennas 0 and 1 since this case assumes a usage of two antennas. The next bit is that of a temporal position of a slot. That is, to indicate what the order number the slot is embedded in the frame transmitted from one antenna. Here, the temporal position of the slot is indicated by a "0" and "1" since one frame is constituted by two slots in this case. These bits are followed by attaching SIR information.

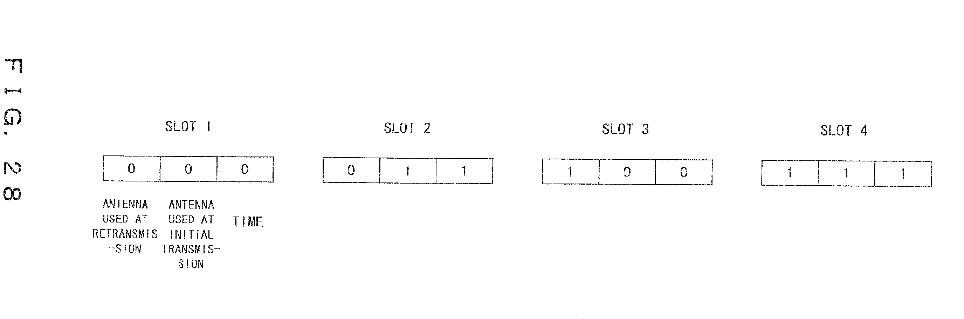

Fig. 28 shows control information transmitted from the transmission side to reception side according to the first embodiment. There is a possibility of a slot being retransmitted from an antenna that is different from the initial transmission, and therefore the transmission side notifies the reception side of what antenna transmits a slot which was initially in what position. The first bit indicates an antenna used for retransmission, the next bit indicates an antenna used for the initial transmission and the last bit indicates the temporal position at the initial transmission in terms of the above described meaning.

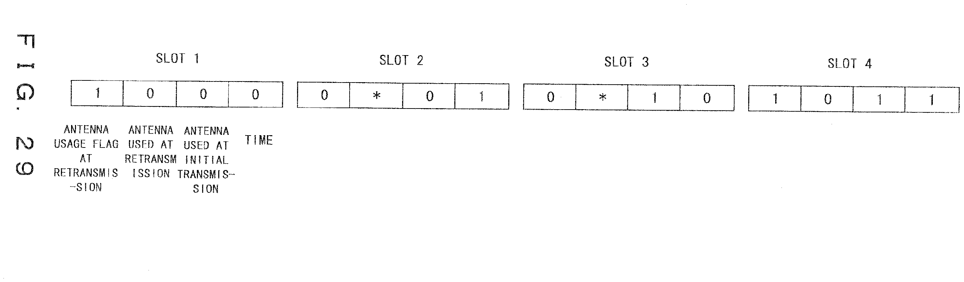

Fig. 29 shows control information transmitted from the transmission side to reception side according to the second embodiment. An antenna usage flag at the time of retransmission is a flag indicating whether or not the slot has been retransmitted. The slots 1 and 4 have been retransmitted in the case of the second embodiment and therefore the flag of the information of the slots 1 and 4 is set at "1". As for the used antenna at retransmission, the slots 1 and 4 are retransmitted by using the antenna 1, and therefore the corresponding bit is set at "0". Since the slots 2 and 3 are not retransmitted, the value is arbitrary, thus the drawing indicated by "*". The bit of the antenna used at the initial transmission is "0" for the slots 1 and 2, and "1" for the slots 3 and 4. The temporal bit indicates a position of the slot within the frame.

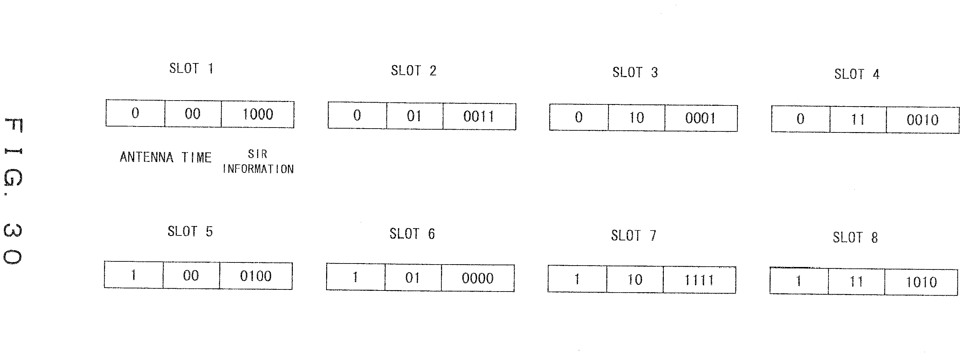

Fig. 30 is control information including SIR information transmitted from the reception side to transmission side according to the third embodiment. The bits of usage antennas are a "0" for the slots 1 through 4, and a "1" for the slots 5 through 8. This indicates that the slots 1 through 4 use the antenna 1 and that the slots 5 through 8 use the antenna 2. The temporal bit indicates a position of the slot within the frame by using two bits since four slots are included in one frame in this case. These pieces of information are followed by featuring with SIR information.

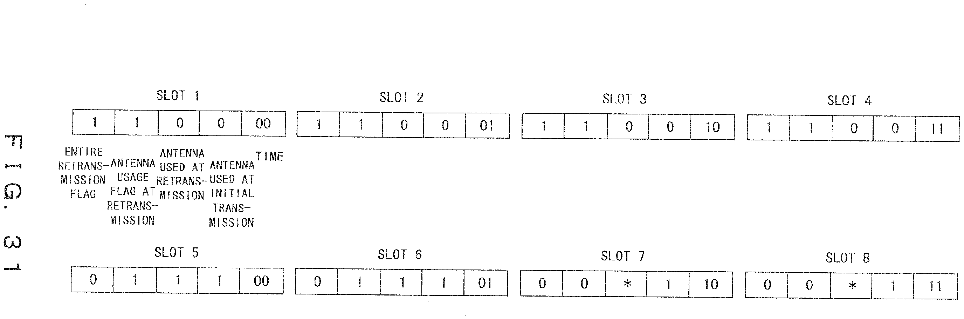

Fig. 31 is control information transmitted from the transmission side to reception side according to the third embodiment. The entire transmission flag is set at "1" for a slot of which the entirety is to be transmitted. Since the entirety of the slots 1 through 4 are retransmitted in the case of the third embodiment, the entirety retransmission flag of the control information of these slots are set at "1". As the antenna usage flag at the time of retransmission indicates a slot that is retransmitted, a "1" is set for the slots 1 through 6. The antenna used at the time of retransmission is set at "0" for the slots 1 through 4, and a "1" is set for the slots 5 and 6. Since the slots 7 and 8 are not retransmitted, the value is arbitrary, thus being indicated by "*". The antenna used at the time of initial transmission is set so as to represent a state of the initial transmission of each slot.

The embodiments of the present invention described above provide the benefits as follows:
(1) enabling an elimination of a waste as a result of transmitting extraneous data at a retransmission in a MIMO transmission or multi-carrier transmission, and retransmitting by placing a retransmission slot straddling antennas or carriers make it possible to improve a reception characteristic by taking advantage of a various diversity effects;
(2) synthesizing information moved to a spare slot, or copied thereto, with the original reception signal makes it possible to improve an S/N ratio of a reception on the reception side;
(3) eliminating a necessity of using a part of antennas depending on how antennas are allocated at the time of retransmission makes it possible to reduce the number of multiplexing antennas of a MIMO, making it easier to gain a reception diversity effect and hence improving a reception characteristic;
(4) eliminating a necessity of using a part of antennas depending on how antennas are allocated at the time of retransmission enables a reduction of the transmission power;
(5) retransmitting with a reduced transmission power provides benefits of reducing the power consumption and suppressing an interference to other users;
(6) increasing a transmission power, alternatively, enables an improvement of the SIR of a reception signal and a reduction of an error rate; and
(7) parallelly using the conventional method of the entirety retransmission of a frame in the case of a certain propagation path condition being particularly inferior, resulting in increasing retransmission slots and decreasing spare slots, then a use of spare slot of which a propagation path condition is not so good becomes unnecessary, thereby making it possible to allocate a spare slot of high quality spare slot for a partial retransmission.

The following numbered paragraphs set out particular combinations of features which are considered relevant to particular embodiments of the present disclosure.
1. A repeat request control apparatus used for a transmission system using a plurality of antenna or plurality of sub-carriers, comprising:
   a retransmission frame generation means for structuring a retransmission-use frame by embedding only a slot to be retransmitted not only in a slot part to be retransmitted within a frame for retransmission but also in a slot unnecessary for retransmission based on information obtained from a reception side and related to a slot within transmission data in which an error has occurred or has highly possibly occurred; and
   a transmission means for transmitting the retransmission-use frame to the reception side.
2. The repeat request control apparatus according to paragraph 1, wherein
   a reception side notifies a transmission side of information indicating a propagation path condition of a received slot.
3. The repeat request control apparatus according to paragraph 2,
   embedding, in a retransmission-use frame, a slot to be transmitted of which a propagation path condition is inferior as higher priority.
4. The repeat request control apparatus according to paragraph 3, wherein
   said propagation path condition of a slot is judged by using a signal to interference component ratio (SIR) obtained at a reception side for each slot.
5. The repeat request control apparatus according to paragraph 3, wherein
   said propagation path condition of a slot is judged by using a Cyclic Redundancy Check (CRC) obtained at a reception side for each slot.
6. The repeat request control apparatus according to paragraph 1,
   retransmitting said retransmission-use frame by using a part of said plurality of antennas or a part of said plurality of sub-carriers.
7. The repeat request control apparatus according to paragraph 1,
   controlling electric power for a retransmission-use frame in accordance with a propagation path condition and a method for embedding a slot to be retransmitted in a retransmission-use frame.
8. The repeat request control apparatus according to paragraph 1,
   retransmitting a frame, as is, as a retransmission-use frame if the number of slots to be retransmitted occupies a large part of the frame.
9. The repeat request control apparatus according to paragraph 1, wherein
   a transmission side notifies a reception side of information related to a slot and antenna or sub-carrier used for retransmission.
10. The repeat request control apparatus according to paragraph 1, further comprising a buffer for storing a slot that is transmitted for each antenna or sub-carrier, wherein
   a slot to be retransmitted is read from the buffer and transmitted when a retransmission is carried out.
11. The repeat request control apparatus according to paragraph 1, wherein said transmission system using a plurality of antennas is a Multi Input Multi Output (MIMO) system.
12. The repeat request control apparatus according to paragraph 1, wherein
   said transmission system using a plurality of sub-carriers is an Orthogonal Frequency Division Multiplexing (OFDM) system.
13. The repeat request control apparatus according to paragraph 1, wherein
   said retransmission frame generation means embeds slots to be retransmitted one by one in a retransmission frame.
14. The repeat request control apparatus according to paragraph 1, wherein said retransmission frame generation means embeds slots to be retransmitted in all slots of a retransmission frame by copying the slots to be transmitted.
15. A repeat request control method used for a transmission system using a plurality of antenna or plurality of sub-carriers, comprising:
   structuring a retransmission-use frame by embedding only a slot to be retransmitted not only in a slot part to be retransmitted within a frame for retransmission but also in a slot unnecessary for retransmission based on information obtained from a reception side and related to a slot within transmission data in which an error has occurred or has highly possibly occurred; and
   transmitting the retransmission-use frame to the reception side.

## Claims

1. A transmitter configured to transmit data to a receiver using first and second antennas, comprising:
a retransmission frame generation means for allocating both of first retransmission data corresponding to first data transmitted from the first antenna and second retransmission data corresponding to second data transmitted from the second antenna to slots in a retransmission frame for the first antenna, based on information regarding propagation paths for the first and second antennas obtained from the receiver; and
a transmission means for transmitting the retransmission frame including the first and second retransmission data to the receiver by using the first antenna without using the second antenna.

2. A transmission method performed by a transmitter configured to transmit data to a receiver using first and second antennas, comprising:
allocating both of first retransmission data corresponding to first data transmitted from the first antenna and second retransmission data corresponding to second data transmitted from the second antenna to slots in a retransmission frame for the first antenna, based on information regarding propagation paths for the first and second antennas obtained from the receiver; and
transmitting the retransmission frame including the first and second retransmission data to the receiver by using the first antenna without using the second antenna.

3. A transmission system, comprising:
a transmitter configured to transmit data to a receiver using first and second antennas; and
a receiver configured to receive the data transmitted from the transmitter; wherein
the transmitter includes,
a retransmission frame generation means for allocating both of first retransmission data corresponding to first data transmitted from the first antenna and second retransmission data corresponding to second data transmitted from the second antenna to slots in a retransmission frame for the first antenna, based on information regarding propagation paths for the first and second antennas obtained from a reception side; and
a transmission means for transmitting the retransmission frame including the first and second retransmission data to the reception side by using the first antenna without using the second antenna.
